(19) Europäisches Patentamt
European Patent Office
Office européen des brevets

(11) Publication number: **0 045 726**
**B1**

(12) # EUROPEAN PATENT SPECIFICATION

(45) Date of publication of patent specification: **10.10.84**

(51) Int. Cl.$^3$: **B 23 B 51/00**

(21) Application number: **81830134.3**

(22) Date of filing: **29.07.81**

(54) **Drill bit for drilling holes in composite fiber/resin laminates.**

(30) Priority: **01.08.80 IT 4940480**

(43) Date of publication of application:
**10.02.82 Bulletin 82/06**

(45) Publication of the grant of the patent:
**10.10.84 Bulletin 84/41**

(84) Designated Contracting States:
**AT BE CH DE FR GB LI LU NL SE**

(56) References cited:
**DE-A-2 757 443**
**FR-A-2 268 590**
**US-A-3 443 459**
**US-A-3 452 625**
**US-A-4 116 580**
**US-A-4 338 050**

**The file contains technical information submitted after the application was filed and not included in this specification**

(73) Proprietor: **AERITALIA Società Aerospaziale Italiana p.A.**
**51 A, Piazzale V. Tecchio**
**I-80125 Napoli (IT)**

(72) Inventor: **D'Apuzzo, Sebastiano**
**181 Via Castellammare**
**Gragnano (Napoli) (IT)**

(74) Representative: **Bazzichelli, Alfredo et al**
**c/o Società Italiana Brevetti Piazza Poli 42**
**I-00187 Roma (IT)**

EP 0 045 726 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

This invention relates to a drill bit for drilling holes in composite materials consisting of fiber/resin laminates.

Among said laminates fiber glass reinforced plastic is included. However the invention is particularly suited for laminates consisting of a resin reinforced with carbon fibers of graphitic structure.

More particularly this invention is concerned with the drilling of laminates hereinafter indicated as "carboresins" formed by graphite fibers embedded in a matrix of epoxy resin.

A material of the type mentioned above is widely used, together with metal sheets, particularly in the aviation industry, for making both movable and fixed parts of airplanes due to its particular characteristics of being light and mechanically resistant.

In practice said carboresin laminates, of a few millimeters in thickness, are used in combination with sheet metal (generally aluminum). This combination is obtained by coupling such laminate and metal sheet face to face and then securing the combination through rivetting.

The combination must guarantee a perfect fluid seal: in fact no type of fluid (liquid or gas) should be capable of penetrating through the coupling of materials so obtained. The rivets, therefore, must be capable of sealing the two adjacent sheets in an absolutely perfect way without there being the possibility of infiltrations of fluids through the seats (i.e. the circular holes in the carboresin sheets) of the rivets themselves.

The drilling of the holes in carboresin laminates presents a great deal of technical difficulties. In fact the graphite fibers/epoxy resin laminate is formed by two phases having very different mechanical properties, i.e. the graphite fibers with a high modulus of elasticity and high mechanical strength and the epoxy resin matrix with low modules and low mechanical strength.

These differences do not allow work on the composite material using conventional drill bits. In fact, due to the contrast between high elastic modulus and low resistance it is necessasry that the stresses on the composite material caused by the penetrating and cutting tool be as small as possible, in order to avoid delamination, particularly of the last lamina at the backside of the sheet.

The bits conventionally used for metal materials, the bits for wood and the center-point helical bits cause delamination of the sheet backside due to their geometry, yielding of the resin joining the last lamina to the previous one and the large stress concentration on such lamina.

U.S. patent 3443459 describes a twist drill having two helicoidal flutes, which merge from the shank to the point of the drill with a rounded profile. The flutes can terminate on the very point of the bit with a straight cutting edge of low conicity angle. In view of its geometrical configuration the drill of the above cited patent causes the material in the hole being drilled to be at any moment in contact with a cutting edge which, being helicoidal, produces shear forces having a component along the axis of revolution. This occurs both during a drilling performed by the rounded portion, and by the helicoidal cylinder portion.

The best suited bit profile for reducing the force of penetration, according to the conventional prior art, appears to be a bit profile having a high conicity. As a matter of fact the high conicity of the sides of said bits allows the appropriate force of penetration of the cutting edge in the material, with an axial thrust reduced with respect to normal helical bits. However, the front cutting edges often cause delamination along an area around the hole, which is larger than the surface of the hole itself. The delamination on unidirectional composite materials with this type of bits is caused also by the tool sides, because the axial force required in order that said sides may remove material, is not sufficiently small. The conicity cannot be further increased, otherwise the bit would become too long creating problems of dimensions during drilling of the hole.

Summary of the Invention

It has now been found according to this invention that an excellent execution of holes in materials of carboresin or glass resin type is obtained by means of a drill bit as claimed in claim the cutting elements of which comprise a first straight sharp edge of relatively large included angle and a second sharp edge having a convex curvature profile.

Said first straight sharp edges are preferably placed on the tip of the bit, such that the geometrical projections thereof in the direction of the longitudinal axis of the bit lie on the bisecting lines of the angles of a regular polygon drawn on a plane perpendicular to said longitudinal axis of the bit and having its geometrical center placed on said axis.

According to the invention, a drill bit for drilling a hole in a composite material consisting of a plastic laminate incorporating graphite carbon or glass fibers, said bit having an odd number of cutting elements, each including a first straight cutting edge and a second curved cutting edge, said bit having an axis about which it is rotated for drilling a hole, comprises in each of said cutting elements:

a first quadrilateral face lying on a plane forming with the other quadrilateral faces a relatively large included angle conventionally suited for the drilling of a hard material, a first side of said quadrilateral face having a direction crossing said axis and forming said first cutting edge, said first cutting edge terminating in a first vertex located at a spaced distance from said axis;

a second face and a third face, each having a side common to said first face and forming a dihedral angle at said first vertex, the edge of said dihedral angle going from said first vertex to a point on said axis opposite to the end of the bit with respect to said first vertex, whereby the sides common to said third and second faces of cutting elements all join at said point on the axis of the bit; and a second cutting edge commencing at a second vertex of said first cutting edge, said second cutting edge being defined by the intersection of

a) a solid of revolution the generatrix of which is a circular arc of a radius being three to four times the diameter of the bit and the revolution axis of which is the axis of the bit, and

b) a cylinder having its axis parallel to the axis of the bit, the said second vertex lying on the surface of said cylinder, and wherein a concave cylinder profile is formed between a pair of adjacent cutting elements.

Description of the Drawings

The present invention will be further illustrated with reference to the included drawings in which:

Fig. 1 is a side view of the bit according to an embodiment of the invention;

Fig. 2 is a plan top view of the bit;

Fig. 3 is a cross section according to line III—III of Fig. 1; and

Fig. 4 is a reproduction of an X-ray photograph taken on a carboresin sheet, in which holes have been drilled with different types of bits, to show the quality of the hole produced by the bit according to the present invention.

Description of the Preferred Embodiment

With reference to Figs. 1 and 2, the stem of the bit indicated in 1 is provided with longitudinal grooves 2 of semi-circular cross section, between which the cutting elements are formed (three) in number and indicated by the numeral 3.

Each cutting element 3 has two sharp edges, i.e. a first straight sharp edge indicated in 4 and a second curved sharp edge indicated in 5.

In the illustrated embodiment, the number of cutting elements is three and the geometrical projections of said straight sharp edges 4, on a plane perpendicular to the longitudinal axis of stem 1, are lying along the bisecting lines of a regular polygon with an odd number of sides, having its geometric center on the axis of stem 1. Said polygon, in the embodiment represented in the figures, is an equilateral triangle, as can be seen in figure 2. The straight sharp edges 4 have a low conicity with respect to the longitudinal axis of stem 1 and preferably the angle formed by the two straight sharp edges 4 is of about 118°.

This is a characteristic of the present invention, since for drilling holes in carboresin type laminates, the teaching of the prior art is unanimous in indicating a high conicity of the straight cutting edges.

The length *r* of the straight sharp edges 4 is preferably comprised between 0.4 and 0.6 with respect to the radius length of a cross section of stem 1 and said straight sharp edges serve essentially the purpose of causing perforation of the material.

The curved sharp edges 5 comprise a first transition portion which begins from straight sharp edge 4 and terminate with a curved profile having the function of reaming the hole to its full measure.

In the preferred embodiment of the drill bit according to the invention, preferably the relief angle of the straight cutting edges 4 is positive, while the rake angle of the curved cutting edges 5 may be positive or negative depending on the composite laminate material to be worked on.

As can be seen more clearly from Figs. 1 and 3, the curved profile portion of the cutting elements 3 is raked on one side as indicated in 6. Said elements 3 are separated one from the other by semi-circular grooves provided on stem 1,

Each of the cutting elements 3 is formed with a first quadrilateral face 7 lying on a plane forming with the other quadrilateral faces a relatively large included angle, preferably of about 118°. A relatively large included angle, though conventionally considered as useful for drilling hard materials, was considered as not favorable for drilling holes in composite materials, the matrix of which is formed of relatively soft materials, such as an epoxy resin. The use of a relatively large included angle for drilling holes in the materials to which the present invention is directed, is a peculiar feature of the present invention.

A first side of said quadrilateral face 7 has a direction crossing said axis 14 and said straight cutting edge 4 is formed on said first side. Said first side terminates with a first vertex 9 which is at a certain distance from said axis 14.

A second face 10 and a third face 11 are contiguous to said face 7 as well as to one another, so forming a dihedral angle the edge 15 of which ends at said first vertex 9. The opposite end of said edge 15 lies on the axis of the bit, so that all the edges 15 of each cutting element 3 join in one point on said axis.

The second cutting edge 5 is contiguous to the first cutting edge 4 in a second vertex 13 opposite to said first vertex 9. Said second edge 5, which has a curved profile with a radius R being 3 to 4 times longer than the diameter D of the bit, can be defined as the intersection of a solid of revolution the generatrix of which is a circular arc of said radius R and the revolution axis of which is the axis of the bit, and a cylinder having its axis parallel to the axis of the bit, said second vertex 13 lying on the surface of said cylinder. The concave cylinder profile 2 is thus generated between each pair of adjacent cutting elements 3.

In order to evaluate the efficiency of the point according to the present invention, comparative tests have been performed with traditional bits or points of the type considered as being best suited for the material to be worked on herein in discussion, and with a bit according to the invention.

The bits used for said tests are the following:

A) a helical bit with center point of Widia, with a cutting edge cone of 180°;

B) bits having a high conicity (8°—9°) with three cutting edges;

C) bits having a high conicity (8°—9°) having five cutting edges;

D) a bit commonly used in aviation industry for this type of work;

E) the bit according to the invention.

As for the bits according to the A, B, C and D type the tolerance calculated on the diameter of these bits was 0.004 cm, while for the bit according to the present invention, indicated in E, the tolerance on the diameter was 0.002 cm.

Holes have been drilled with these tools using drilling speeds of 18000, 9000 and 4500 r.p.m., on a sheet of carboresin the thickness of which was about 2 mm.

An X-ray picture has been taken in order to evaluate quality of the holes produced with the different bits.

A photographic reproduction on positive of said X-ray picture is shown in Fig. 4, in which on horizontal lines, holes obtained with the respective bits at the number of r.p.m. indicated above are shown.

It should be noted that bit A produces conspicuous delamination of the material.

Also bits B and C show delaminations of the hole edges, which, through less accentuated, are still conspicuous.

Bit D produces improved holes, but the risk of delamination is still high, as shown by the halo around the edges of the holes.

Bit E, according to the invention instead, produces holes which are dimensionally more accurate and which are, moreover, free from delamination on the backside of the sheet.

The bit according to the invention is preferably made from a hard alloy metal material. A material which has proven particularly suited is tungsten carbide.

## Claims

1. A drill bit for drilling a hole in a composite material consisting of a plastic laminate incorporating graphite carbon or glass fibers, said bit having an odd number of cutting elements (3), each including a first straight cutting edge (4) and a second curved cutting edge (5), said bit having an axis (14) about which it is rotated for drilling a hole, and comprising in each of said cutting elements:

a first quadilateral face (7) lying on a plane forming with the other quadrilateral faces a relatively large included angle conventionally suited for the drilling of a hard material, a first side of said quadrilateral face having a direction crossing said axis and forming said first cutting edge (4), said first cutting edge terminating in a first vertex (9) located at a spaced distance from said axis;

a second face (10) and a third face (11), each having a side common to said first face (7) and forming a dihedral angle at said first vertex (9), the edge (15) of said dihedral angle going from said first vertex (9) to a point (12) on said axis opposite to the end of the bit with respect to said first vertex (9), whereby the sides common to said third and second faces (11, 10) of cutting elements (3) all join at said point (12) on the axis of the bit;

and a second cutting edge (5) commencing at a second vertex (13) of said first cutting edge (4), said second cutting edge (5) being defined by the intersection of

a) a solid of revolution the generatrix of which is a circular arc of a radius (R) being three to four times the diameter of the bit and the revolution axis of which is the axis of the bit, and

b) a cylinder having its axis parallel to the axis of the bit, the said second vertex (13) lying on the surface of said cylinder, and wherein a concave cylinder profile (2) is formed between a pair of adjacent cutting elements (3).

2. A bit according to claim 1 wherein the projections of said first cutting edges (4) on a plane normal to said axis of the bit, in the direction of said axis, form bisectrices of the angles of a regular polygon having a number of sides equal to the number of said cutting elements (3) and having its center on said axis of the bit.

3. A bit according to claim 1, wherein said first cutting edges form an included angle of 118°.

4. A bit according to claim 1, wherein said first cutting adges have a positive relief angle.

## Revendications

1. Foret de perceuse pour percer des trous dans un matérial composite formé d'un laminé plastique renforcé par des fibres de carbone graphitique ou de verre, le dit foret ayant un nombre impaire d'éléments tranchants (3), chacun d'eux comprenant une première arête de coupe droite (4) et une seconde arête de coupe cambrée (5), le dit forêt ayant un axe (14) autour duquel il doit tourner pour percer un trou, et comprenant dans chacun des dits éléments tranchants:

une première face quadrilatérale (7) située sur un plan qui forme avec les autres faces quadrilatérales un angle inclus relativement large conventionellement approprié pour percer un matérial dur, un premier côté de la dite face quadrilatérale ayant une direction qui croise le dit axe et formant la dite première arête de coupe (4), la dite première arête de coupe terminant en un premier sommet (9) situé à une certaine distance du dit axe;

une seconde face (10) et une troisième face (11), chacune ayant un coté en commun avec la dite première face (7) et formant un angle dièdre en correspondance du dit premier sommet (9), l'arête (15) du dit angle dièdre allant du dit premier sommet (9) à un point (12) sur le dit axe opposé au bout du foret par rapport au dit premier sommet (9), de sorte que les côtés communs aux dites troisième et seconde faces (11, 10) des éléments tranchants (3) se réunissent tous sur le dit point (12) sur l'axe du foret;

et une seconde arête de coupe (5) qui part d'un second sommet (13) de la dite première arête de coupe (4), la dite seconde arête de coupe (5) étant définie par l'intersection de:

a) un solide de révolution dont la génératrice est un arc de cercle avec un rayon (R) de trois à quatre fois le diamètre du foret et dont l'axe de révolution est l'axe du foret; et

b) un cylindre dont l'axe est parallèle à l'axe du foret, le dit second sommet (13) étant situé sur la surface du dit cylindre, et où un profil concave cylindrique (2) est formé entre deux éléments tranchants (3) adjacents.

2. Foret selon la revendication 1, où les projections des dites premières arêtes de coupe (4) sur un plan normal à l'axe du foret, dans la direction du dit axe, forment des bisectrices des angles d'un polygone régulier dont le nombre des còtés est égal au nombre des dits éléments tranchants (3) et ayant son centre sur le dit axe du foret.

3. Foret selon la revendication 1, où les dites premières arêtes de coupe forment un angle inclus de 118°.

4. Foret selon la revendication 1, où les dites premières arêtes de coupe ont un angle de dépouille positif.

**Patentansprüche**

1. Bohrerspitze um Loecher in Verbundplatten, welche aus einem Graphitkohle oder Glasfasern enthaltenden Schichtpresstoff bestehen, zu bohren, wobei die Spitze eine ungerade Zahl von Schneidegliedern hat (3), jede eine erste gerade Schneide (4) und eine zweite gekurvte Schneide (5) einschliessend, diese Spitze eine Achse habend, um die sie sich dreht, um ein Loch zu bohren, und alle Schneideglieder enthalten:

eine erste viereckige Flaeche (7) welche, auf einer Ebene liegend, mit den anderen viereckigen Flaechen einen verhaeltnismaessig breiten Innenwinkel bildet, zum Bohren in hartem Material geeignet, wobei eine erste Seite der besagten viereckigen Flaeche eine die Achse kreuzende Richtung hat und die erste Schneide (4) bildet, diese erste Schneide in einem ersten Scheitel (9) endend, welcher in einem Abstand zu der Achse steht;

eine zweite Flaeche (10) und eine dritte Flaeche (11), jede eine gemeinsame Seite mit der ersten Flaeche (7) habend und einen V-foermigen Winkel in dem ersten Scheitel (9) bildend, wobei die Kante (15) dieses V-foermigen Winkels von dem ersten Scheitel (9) zu einem auf der Achse liegenden Punkt (12) gegenueber dem Ende der Bohrspitze mit Bezug auf den ersten Scheitel (9) fuerhrt, wobei die mit der dritten und zweiten Flaeche (11, 10) gemeinsamen Seiten der Schneideglieder (3) alle am Punkt (12) an der Achse der Bohrspitze zusammentreffen.

und eine zweite Schneide (5) an einem zweiten Scheitel (13) der ersten Schneide (4) beginnend, wobei die zweite Schneide (5) gebildet wird durch den Schnittpunkt von

a) einem Umlaufkoerper, erzeugt von einem Kreisbogen mit einem Halmesser (R) der den drei- bis vierfachen Durchmesser der Bohrspitze und der Umlaufachse der Spitzenachse hat, und

b) einem Zylinder, dessen Achse parallel zu der Achse der Bohrspitze liegt, wobei der zweite Scheitel (13) auf der Zylinderoberflaeche liegt und ein konkaves Zylinderprofil (2) zwischen einem Paar aneinanderliegender Schneiden (3) entsteht.

2. Eine Bohrspitze gemaess Anspruch 1, wobei die Projektionen der ersten Schneide (4) auf einer zu der Spitzenachse senkrechten Ebene, in die Richtung dieser Achse, Halbierungslinien der Winkel eines regulaeren Polygons bilden, dessen Seitenanzahl gleich der Anzahl der Schneiden (3) ist und dessen Mittelpunkt in der Spitzenachse liegt.

3. Eine Bohrspitze gemaess Anspruch 1, wobei die ersten Schneiden einen Innenwinkel von 118° bilden.

4. Eine Bohrspize gemaess Anspruch 1, wobei die ersten Schneiden einen positiven Hinterschliffwinkel besitzen.

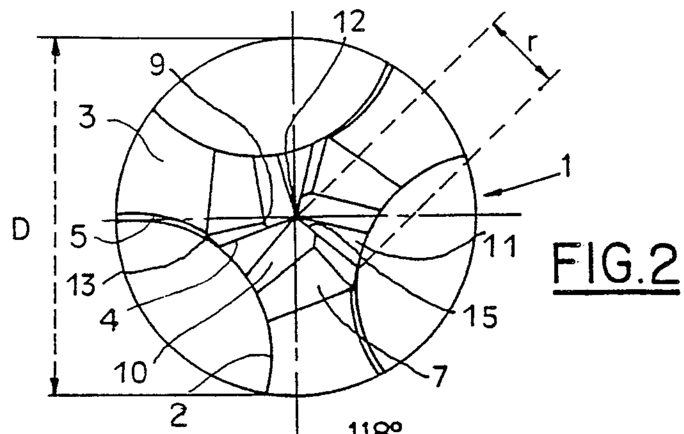


FIG.2

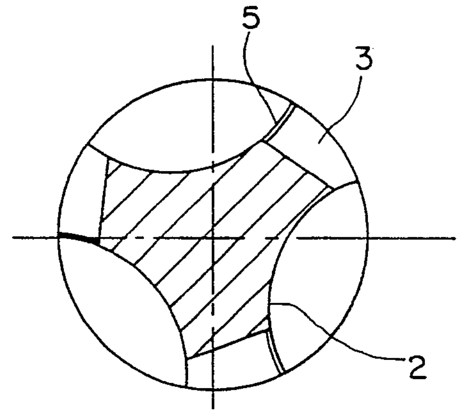


FIG.3

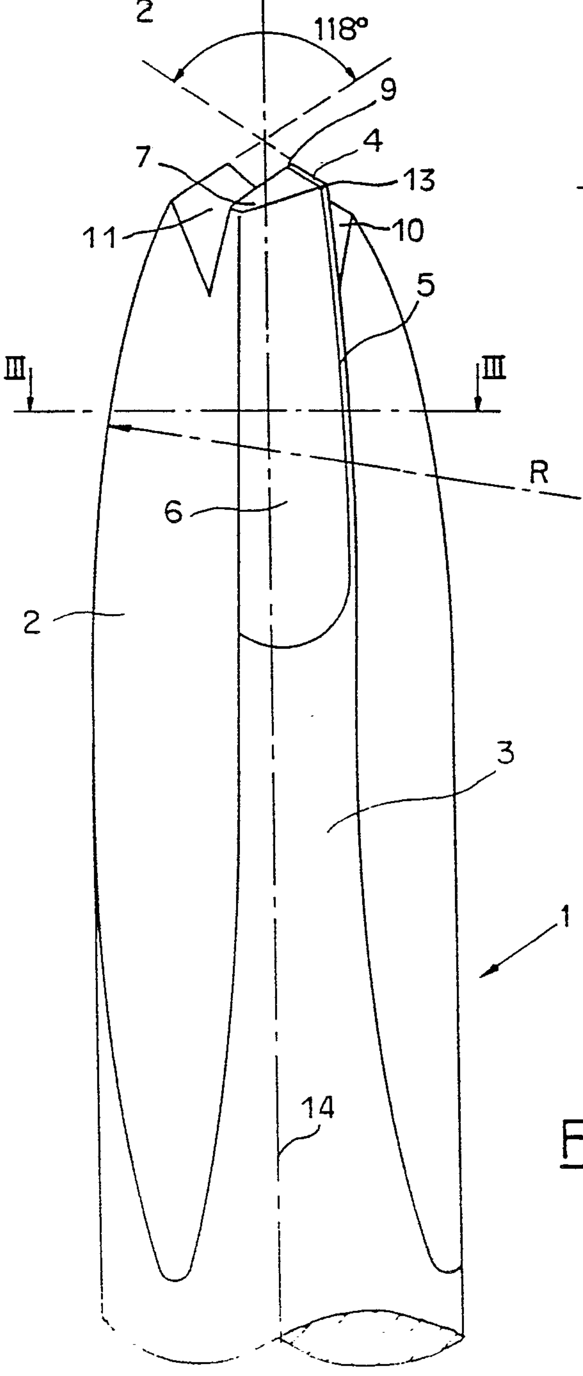


FIG.1

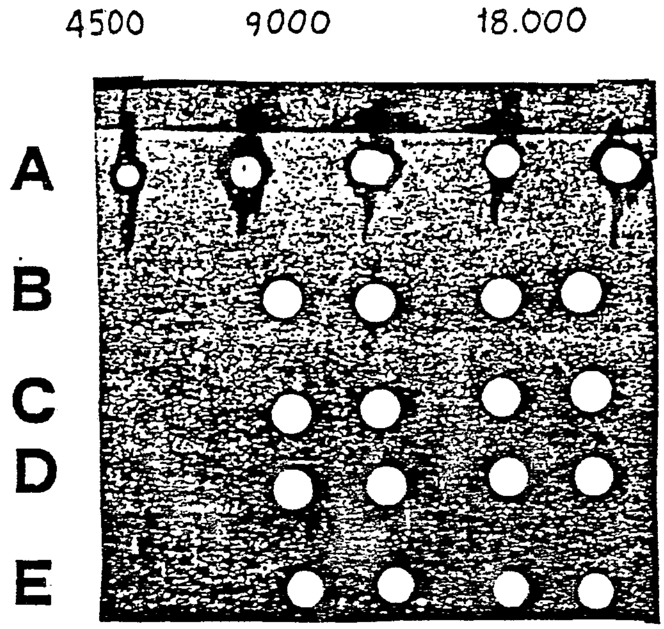


FIG. 4